# EUROPEAN PATENT APPLICATION

(11) **EP 2 229 992 A1**
(43) Date of publication of application: **22.09.2010**
(21) Application number: 10156237.9
(22) Date of filing: 11.03.2010
(51) Int. Cl.: B01D 39/16

(54) **Filter and Method of Manufacture**

(30) Priority: 20.03.2009 GB 0904770
(71) Applicant: Brentnall, Nicholas, Cheltenham Gloucestershire GL51 6QL (GB)
(72) Inventor: Brentnall, Nicholas, Cheltenham Gloucestershire GL51 6QL (GB)
(74) Representative: Jackson, Derek Charles

(57) **Abstract**

A filter comprises a pad (1) of non-woven fibrous material, and a pattern (3) of reinforced fibres formed in a surface region of the pad by bonding together adjacent fibres. The filter is manufactured by providing a pad (1) of non-woven fibrous material, and bonding together adjacent fibres to create a pattern (3) of reinforced fibres in a surface region of the pad.

## Description

### FILTER AND METHOD OF MANUFACTURE

This invention relates to a filter formed of non-woven fibrous material and to a method of manufacturing such a filter.

It is well known to make filters of non-woven fibrous material. However, the surface of the filter material is easily damaged, especially when the filter is washed regularly to clean it. The filter therefore includes a protective cover, for example of mesh or gauze material, such as of plastics or corrosion resistant metal material, in order to prevent damage to the filter material when the filter is washed. However, the provision of a protective cover necessitates additional material costs and it would therefore be desirable to omit such a cover.

It is therefore an object of the present invention to provide a filter of non-woven fibrous material which overcomes or at least ameliorates the above disadvantages, and to provide a method of manufacturing such a filter.

According to one aspect of the present invention there is provided a filter comprising a pad of non-woven fibrous material, and a pattern of reinforced fibres formed in a surface region of the pad by bonding together adjacent fibres.

According to another aspect of the present invention there is provided a method of manufacturing a filter comprising the steps of: providing a pad of non-woven fibrous material; and bonding together adjacent fibres to create a pattern of reinforced fibres in a surface region of the pad.

A pattern of reinforced fibres may be formed in opposing surface regions of the pad. The pattern may comprise a rectilinear grid or spaced dots. Spacings within the pattern may be selected in relation to the nominal length of fibres in the pad such that, on average, each fibre in the surface region traverses at least two pattern features. The pad may comprise a plastics material such as polyester, polypropylene, nylon 6 or nylon 6/6.

The pattern of reinforced fibres may be formed by the application of heat and pressure for a predetermined time. In such a case the pattern of reinforced fibres may comprise a pattern of indentations in the surface of the pad. Pressure may be provided by a die bearing an inverse of the pattern of indentations. Heat may be provided by electrical heating elements or by ultrasonic heating means. The electrical heating elements may be provided in the die. The surface regions of the pad may be heated substantially to the softening point of the fibrous material. The softening point may be in the range from 20 to 30 degrees Celsius below the melting point to the melting point.

Alternatively, a pattern of reinforcing fibres may be formed in a surface region of the pad by depositing a solidifiable substance in a pattern on the surface of the pad and solidifying the substance. The solidifiable substance may be a pre-polymer or may be a paint, for example, and may be deposited by silkscreen printing. The solidifiable substance may be solidified, for example, with heat and/or light.

Thus the present invention provides a filter which has a durable surface without the need for any additional components.

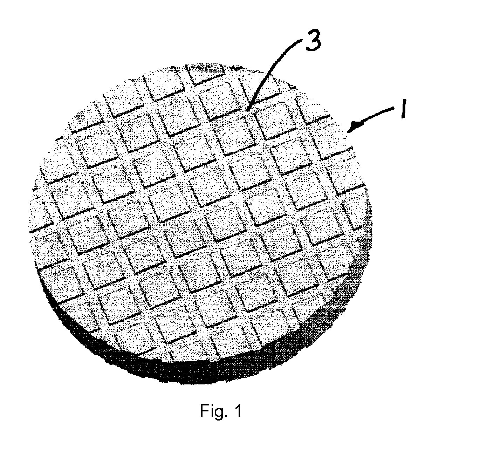

For a better understanding of the present invention and to show more clearly how it may be carried into effect reference will now be made, by way of example, to the accompanying figure which shows one embodiment of a filter of non-woven fibrous material made in accordance with the present invention.

The figure shows a filter pad 1 of non-woven fibrous material, for example of a plastics material such as polyester, polypropylene, nylon 6 or nylon 6/6. In order to provide a durable surface, the exposed faces of the filter pad, while not substantially restricting the flow of fluid through the filter, surface region of the filter pad are consolidated by the application of heat and pressure for a predetermined time to create a pattern 3 of reinforced fibres in the form of indentations on the surface of the filter pad where adjacent fibres are bonded together. As shown, the pattern of indentations may be in the form of a rectilinear grid, but other patterns may be employed, such as spaced dots (not shown). The spacing between adjacent features of the pattern may ideally be chosen in relation to the nominal length of the fibres in the pad such that, on average, each fibre in the surface region traverses at least two pattern features. In this way, the fibres in the surface region of the pad are bonded together sufficiently securely to provide a durable surface and the resulting filter can withstand repeated washing without serious degradation of the filter and without the need for a protective cover. In addition, the spacing between pattern features is sufficient to avoid restricting the flow of fluid through the filter.

In order to form the pattern 3 of indentations, a die (not shown) bearing the inverse of the pattern is applied to the or opposing surfaces of the pad 1 to compress the same and impress the pattern into the surface of the pad. At the same time, the material of the pad is heated substantially to its softening point, that is to a temperature below the melting point at which the material softens, for a few seconds. This is generally in the range from 20 to 30 degrees Celsius below the melting point to the melting point. Thus, for polyester materials the surface region of the pad corresponding to the pattern may be heated from about 235 to about 265 degrees Celsius, for polypropylene materials the surface region of the pad corresponding to the pattern may be heated from about 145 to about 165 degrees Celsius, for nylon 6 materials the surface region of the pad corresponding to the pattern may be heated from about 180 to about 210 degrees Celsius, and for nylon 6/6 materials the surface region of the pad corresponding to the pattern may be heated from about 245 to about 265 degrees Celsius. In this way, the fibres in the surface region corresponding to the pattern are softened and bond to each other and become consolidated.

There is a practical relationship between the time the pad is heated, the pressure applied to the pad and the temperature to which the fibres of the pad are heated. For example, a lower temperature requires more pressure and/or time, while a higher temperature requires lower pressure and/or a shorter time. Such relationship can readily be determined for any particular material by routine tests not requiring any inventive activity.

The material of the pad 1 may be heated, for example, by proving a die having a protruding configuration corresponding to the patter to be formed on the pad, by incorporating electrical heating elements in regions of the die corresponding to the pattern, or by using ultrasonic or other suitable forms of heating.

As an alternative, the fibres of the pad may be bonded together in a surface region of the pad so as to form a reinforcing surface pattern by depositing a solidifiable substance, such as a liquid pre-polymer or paint, in a pattern on the surface of the pad, for example by silkscreen printing, and solidifying the substance, for example with heat and/or light.

## Claims

1. A filter comprising a pad (1) of non-woven fibrous material, and a pattern (3) of reinforced fibres formed in a surface region of the pad by bonding together adjacent fibres.

2. A filter as claimed in claim 1, wherein a pattern (3) of reinforced fibres is formed in opposing surface regions of the pad (1).

3. A filter as claimed in claim 1 or 2, wherein spacings within the pattern (3) are selected in relation to the nominal length of fibres in the pad (1) such that, on average, each fibre in the surface region traverses at least two pattern features.

4. A filter as claimed in any preceding claim, wherein the pad (1) comprises a plastics material.

5. A filter as claimed in claim 4, wherein the plastics material is selected from polyester, polypropylene, nylon 6 and nylon 6/6.

6. A method of manufacturing a filter comprising the steps of: providing a pad (1) of non-woven fibrous material; and bonding together adjacent fibres to create a pattern (3) of reinforced fibres in a surface region of the pad.

7. A method according to claim 6, wherein a pattern (3) of reinforced fibres is formed in opposing surface regions of the pad (1).

8. A method according to claim 6 or 7, wherein spacings within the pattern (3) are selected in relation to the nominal length of fibres in the pad (1) such that, on average, each fibre in the surface region traverses at least two pattern features.

9. A method according to claim 6, 7 or 8, wherein the pad (1) comprises a plastics material.

10. A method according to claim 9, wherein the plastics material is selected from polyester, polypropylene, nylon 6 and nylon 6/6.

11. A method according to any one of claims 6 to 10, wherein the pattern (3) of reinforced fibres is formed by the application of heat and pressure for a predetermined time.

12. A method according to claim 11, wherein the pattern (3) of reinforced fibres comprises a pattern of indentations in the surface of the pad (1).

13. A method according to claim 11 or 12, wherein pressure is provided by a die bearing an inverse of the pattern of indentations.

14. A method according to claim 11, 12 or 13, wherein the surface regions of the pad (1) are heated substantially to the softening point of the fibrous material.

15. A method according to any one of claims 6 to 10, wherein a pattern (3) of reinforcing fibres is formed in a surface region of the pad (1) by depositing a solidifiable substance in a pattern on the surface of the pad and solidifying the substance.
